# DEMANDE DE BREVET EUROPEEN

(11) **EP 2 629 481 A1**
(43) Date de publication de la demande: **21.08.2013**
(21) Numéro de dépôt: 12305169.0
(22) Date de dépôt: 15.02.2012
(51) Int. Cl.: H04L 29/06

(54) **Serveur d'applications permettant à un abonné donné d'un système de communication d'entreprise d'utiliser des services fournis par ce système, via un terminal donné qui n'appartient pas à ce système de communication d'entreprise**

(71) Demandeur: Alcatel Lucent, 75007 Paris (FR)
(72) Inventeur: Abou-Chakra, Rabih, 92707 Colombes (FR); Leroy, Jean François, 29228 Brest (FR)
(74) Mandataire: Sciaux, Edmond

(57) **Abrégé**

Un serveur d'applications (SAC ; SAT) permettant à un abonné donné d'un système de communication d'entreprise (SCE ; SCE') d'utiliser des services fournis par ce système, via un terminal donné (T ; T') qui n'appartient pas à ce système de communication d'entreprise (SCE ; SCE'), comporte :
- des moyens pour recevoir (104 ; 204), en provenance d'une base de données (BDA ; BDA'), des données permettant d'afficher une page d'accueil sur ce terminal (T ; T'), des données permettant d'authentifier cet abonné, et des données permettant de commander ce système de communication d'entreprise via ce terminal (T ; T') de façon à bénéficier de services applicatifs directement depuis ce terminal ;
- des moyens pour retransmettre (105 ; 205) à ce terminal (T ; T') les données reçues ;
- et des moyens pour demander (106 ; 206) au système de communication d'entreprise d'enregistrer ce terminal (T ; T') comme étant un terminal de ce système de communication d'entreprise, quand l'abonné a été authentifié.

## Description

L'invention concerne un serveur d'applications permettant à un abonné donné d'un système de communication d'entreprise d'utiliser des services fournis par ce système, via un terminal donné qui n'appartient pas à ce système de communication d'entreprise. Un système de communication d'entreprise utilisant le protocole Internet comprend généralement un serveur d'appels, un serveur d'applications, et des terminaux répartis dans les locaux d'une entreprise. Les abonnés enregistrés dans ce système utilisent ces terminaux d'entreprise pour demander au serveur d'applications divers services, en plus de l'établissement des communications téléphoniques. Le serveur d'applications d'une entreprise permet notamment à un abonné de :
- Consulter un annuaire des employés de l'entreprise.
- Consulter la liste des appels perdus, destinés à cet abonné, c'est-à-dire les appels auxquels cet abonné n'a pas pu répondre.
- Configurer un transfert des appels destinés à un terminal de cet abonné, vers un autre terminal de cet abonné ; cet autre terminal pouvant être un terminal de l'entreprise ou un terminal de réseau public.
- Configurer un groupe d'abonnés de façon qu'un appel destiné à cet abonné fasse sonner tous les terminaux de ce groupe, et soit transféré vers le premier terminal, de ce groupe, qui prend l'appel.
- Voir une indication de message textuel ou vocal en attente, pour cet abonné.
- Commander l'affichage d'un message textuel en attente, ou la lecture d'un message vocal en attente.

Quand un abonné d'un système de communication d'entreprise est hors des locaux de l'entreprise, il ne peut pas bénéficier facilement de la plupart des services fournis par le système de communication de l'entreprise où il travaille habituellement. C'est par exemple le cas d'un employé en mission dans une autre entreprise, dans un hôpital, etc ; ou télé-travaillant à son domicile privé, ou dans un hôtel.

Par exemple, considérons le cas d'un employé résidant dans un hôtel. Il dispose d'un terminal téléphonique dans sa chambre. Ce terminal est raccordé à un système de communication d'entreprise qui est propre à l'hôtel. Cet employé peut commander, par un procédé connu, le serveur d'applications de son entreprise de façon que ce serveur considère le terminal téléphonique de la chambre d'hôtel comme un terminal virtuel du serveur d'appels de l'entreprise qui l'emploie.

S'il utilise seulement le terminal de l'hôtel, il bénéficie seulement de quelques services : ceux qui utilisent la signalisation normalisée pour recevoir ou établir une communication vocale ou vidéo. Il peut établir ou recevoir des appels via le serveur d'appels de son entreprise, un réseau téléphonique public quelconque, et le système de communication de l'hôtel. Mais la signalisation normalisée ne permet pas des services applicatifs tels que consulter l'annuaire de son entreprise à partir de cet hôtel.

S'il utilise un second terminal, en plus du terminal de l'hôtel, il peut accéder au serveur d'appels et à certains services applicatifs. Ce second terminal est nécessaire pour commander le système de communication de son entreprise, notamment son serveur d'applications, via un réseau téléphonique public quelconque : Par exemple, un téléphone cellulaire exécutant un logiciel client adapté pour commander le serveur d'applications de l'entreprise, ou un ordinateur personnel exécutant un navigateur web pour accéder à une interface web du serveur d'applications de l'entreprise, via l'Internet, cette interface web commandant le serveur de communication de l'entreprise. Il peut ainsi consulter sa messagerie vocale. S'il a plusieurs terminaux téléphoniques, il peut aussi demander à faire sonner plusieurs terminaux en parallèle. Mais ce procédé ne lui permet pas d'accéder à tous les services applicatifs, par exemple il ne permet pas de consulter l'annuaire de son entreprise à partir de cet hôtel.

Par conséquent, ce procédé connu a pour inconvénient de nécessiter un second terminal et de ne permettre de bénéficier que d'une partie des services applicatifs du système de communication de l'entreprise.

Le but de l'invention est de remédier à ces deux inconvénients.

L'objet de l'invention est un serveur d'applications permettant à un abonné donné d'un système de communication d'entreprise d'utiliser des services fournis par ce système, via un terminal donné qui n'appartient pas à ce système de communication d'entreprise ; **caractérisé en ce qu'**il comporte :
- des moyens pour recevoir, en provenance d'une base de données, des données permettant d'afficher une page d'accueil sur ce terminal, des données permettant d'authentifier cet abonné, et des données permettant de commander ce système de communication d'entreprise via ce terminal de façon à bénéficier de services applicatifs directement depuis ce terminal ;
- des moyens pour retransmettre à ce terminal les données reçues ;
- et des moyens pour demander au système de communication d'entreprise d'enregistrer ce terminal comme étant un terminal de ce système de communication d'entreprise, quand l'abonné a été authentifié.

Le serveur ainsi caractérisé permet de commander le système de communication de l'entreprise, avec un seul terminal donné, en toute sécurité, parce qu'il permet de retrouver des données permettant d'authentifier un abonné donné, et des données permettant de commander ce système de communication d'entreprise via le terminal qui est à la disposition de cet abonné ; et de les fournir à ce terminal donné pour exécuter l'authentification de cet abonné, et pour réaliser une commande de ce système de communication d'entreprise.

L'invention a aussi pour objet une base de données permettant à un abonné donné d'un système de communication d'entreprise d'utiliser des services fournis par ce système, via un terminal donné qui n'appartient pas à ce système de communication d'entreprise ; **caractérisée en ce qu'**elle comporte :
- des moyens pour recevoir une requête demandant des données permettant d'afficher une page d'accueil sur ce terminal, des données permettant d'authentifier cet abonné, et des données permettant de commander ce système de communication d'entreprise via ce terminal ;
- et des moyens pour fournir les données demandées dans cette requête.

L'invention sera mieux comprise et d'autres caractéristiques apparaîtront à l'aide de la description ci-dessous et des figures l'accompagnant :
- La figure 1 représente un exemple d'échange de signaux entre le système de communication d'une entreprise et le système de communication d'un hôtel, ce dernier comportant un exemple de réalisation du dispositif selon l'invention.
- La figure 2 représente un exemple d'échange de signaux entre le système de communication d'une entreprise et un terminal téléphonique d'un télétravailleur, ce terminal comportant un exemple de réalisation du dispositif selon l'invention.

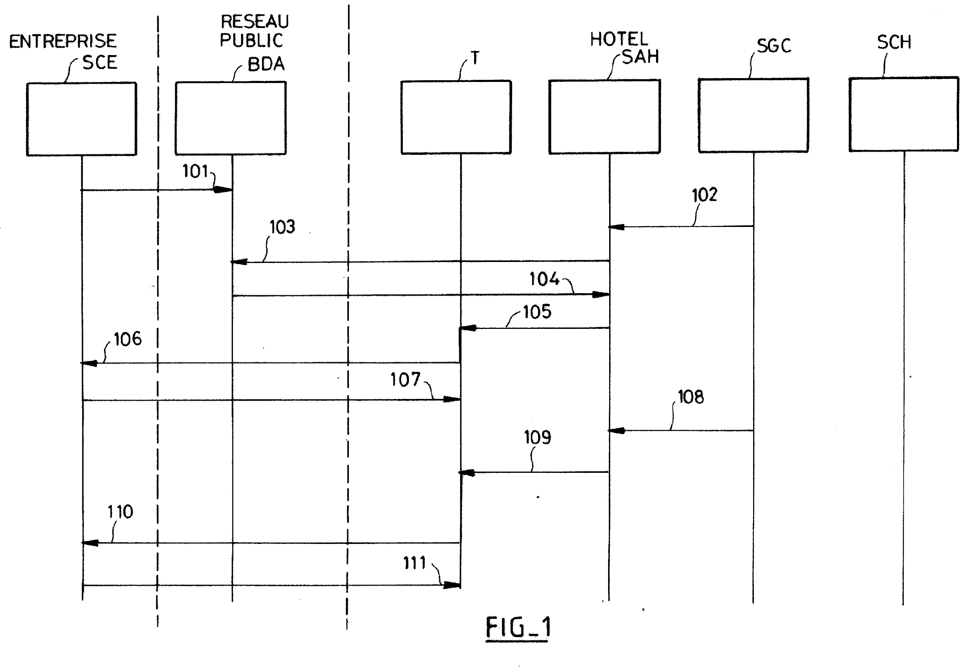

Dans l'exemple représenté sur la figure 1, une entreprise possède un système de communication d'entreprise SCE utilisant le protocole Internet ; un hôtel possède un système de communication qui comporte un système de communication SCH, utilisant le protocole Internet, et un système de gestion de clients SGC. Par exemple, un employé de cette entreprise réside dans cet hôtel et dispose d'un terminal téléphonique T dans sa chambre. Ce terminal utilise les protocoles Internet et SIP. Selon l'invention, un serveur d'applications hôtelières SAH est associé au système de communication SCH et au système de gestion des clients SGC, pour permettre à des clients de bénéficier des services fournis habituellement par les systèmes de communication des entreprises qui les emploient respectivement.

Dans cet exemple, les systèmes de communication SCH et SCE sont reliés à un réseau téléphonique public de type IMS (Internet Multimedia Subsystem : Sous-système Multimédia Internet). Dans d'autres exemples de réalisation, ils pourraient être reliés à un réseau téléphonique public synchrone, au moyen d'une passerelle permettant de transporter les messages de signalisation SIP.

Une base de données BDA, appartenant à un fournisseur de services, est reliée à ce réseau téléphonique public de type IMS. Elle mémorise des données identifiant :
- Les entreprises qui bénéficient d'un service permettant à un employé d'une entreprise donnée d'utiliser un terminal qui n'est pas directement relié au système de communication de cette entreprise, en bénéficiant de tous les services fournis habituellement par ce système de communication quand cet employé utilise un terminal de cette entreprise.
- Les employés autorisés par ces entreprises à bénéficier de ce service (Identifiants et données d'authentification par mots de passe).

Pour qu'un client de l'hôtel utilise un service fourni par le système de communication d'entreprise SCE, il y a un échange de messages de signalisation SIP, qui comporte les étapes suivantes :
- 101 : L'entreprise s'abonne à ce service. Le système de communication de l'entreprise SCE envoie alors un message qui commande l'enregistrement de l'entreprise dans la base de données BDA. Cet enregistrement comporte un identifiant de l'entreprise et une liste des employés de l'entreprise, qui sont autorisés à utiliser ces services (Identifiant et données d'authentification par mot de passe pour chaque employé autorisé).
- 102 : Lorsque l'employé considéré arrive et s'enregistre à la réception de l'hôtel, le système de gestion de clients SGC envoie le nom du client et éventuellement le nom de son entreprise au serveur d'applications hôtelières SAH. En général, il n'est pas nécessaire de transmettre le nom de l'entreprise, parce qu'on peut le retrouver en cherchant le nom de la personne, sauf cas d'homonymie. Le nom de l'entreprise diminue les risques d'homonymie. En outre, en cas d'homonymie à l'intérieur d'une même entreprise, il est toujours possible de demander au client d'autres informations, telles que son adresse email par exemple.
- 103 : Le serveur d'applications hôtelières SAH envoie, à la base de données BD, une requête contenant le nom de l'entreprise, et le cas échéant le nom de l'abonné, et demandant des données correspondant à cet abonné.
- 104 : La base de données BDA détermine si l'entreprise qui emploie ce client est abonnée au service permettant à un employé d'une entreprise donnée d'utiliser un terminal qui n'est pas directement relié au système de communication de cette entreprise, en bénéficiant de tous les services fournis habituellement par ce système de communication ; et détermine si cet employé est autorisé à utiliser ce service. Si le client et l'entreprise sont enregistrés dans la base de données BD, la base de données BDA envoie au serveur d'applications hôtelières SAH des données permettant d'afficher une page d'accueil sur le terminal T, des données permettant d'authentifier ce client, et des données permettant de commander le système de communication d'entreprise via le terminal T, après authentification du client, de façon à bénéficier de services applicatifs directement depuis ce terminal.
- 105 : Le serveur d'applications hôtelières SAH envoie ces données au terminal T. Elles permettent au terminal T d'afficher une page de texte invitant le client à saisir son identifiant et son mot de passe, s'il souhaite bénéficier de tous les services fournis habituellement par le système de communication d'entreprise SCE. Le client saisit son identifiant et son mot de passe. Le terminal T authentifie le client selon un procédé d'authentification connu, en utilisant des données d'identification reçues du serveur SAH.
- 106 : Si le client est authentifié, le terminal T utilise les données permettant de commander le système de communication d'entreprise. Il constitue et envoie un message au système de communication d'entreprise SCE pour demander à être enregistré comme un terminal du réseau d'entreprise.
- 107 : Le système de communication d'entreprise SCE enregistre le terminal T, puis envoie au terminal T un message indiquant que les services du système de communication d'entreprise sont à la disposition du client via le terminal T, et l'invitant à choisir un service dans un menu. Ce message est affiché sur le terminal T pendant une durée prédéterminée. Le client n'utilise pas forcément ces services immédiatement.
- 108 : Ultérieurement, quand ce client revient dans sa chambre, le lecteur de badge de sa porte de chambre est actionné au moyen d'une carte à piste magnétique ou à puce. Le lecteur de badge signale cet évènement au système de gestion des clients SGC. Le système de gestion des clients SGC envoie un message au serveur d'applications hôtelières SAH pour signaler cet évènement.
- 109 : Le serveur d'applications hôtelières SAH envoie alors au terminal T un message rappelant au client que les services du système de communication d'entreprise sont à la disposition de ce client via le terminal T, et l'invitant à saisir son identifiant et son mot de passe avant de choisir un service. Ce message s'affiche sur le terminal T pendant une durée prédéterminée.
- 110 : A cet instant le client décide, par exemple, de consulter l'annuaire de l'entreprise. Il saisit de nouveau son identifiant et son mot de passe. Le terminal T authentifie le client selon le même procédé d'authentification connu. Il l'invite à choisir un service dans un menu. Si l'authentification se passe bien, le terminal T envoie un message d'activation du service demandé, au système de communication d'entreprise SCE.
- 111 : Le système de communication d'entreprise SCE envoie au terminal T un message commandant l'affichage d'informations d'annuaire.

Les échanges de signaux se déroulent de manière analogue pour tous les autres services que peut fournir le système de communication SCE de l'entreprise. Le client peut :
- Consulter la liste des appels perdus, destinés à cet abonné, c'est-à-dire les appels auxquels cet abonné n'a pas pu répondre ; cette liste étant tenue par le système de communication SCE de l'entreprise.
- Configurer un transfert des appels destinés à un terminal de cet abonné, vers un autre terminal de cet abonné ; cet autre terminal pouvant être un terminal de l'entreprise ou un terminal de réseau public.
- Configurer un groupe d'abonnés de façon qu'un appel destiné à cet abonné fasse sonner tous les terminaux de ce groupe, et soit transféré vers le premier terminal, de ce groupe, qui prend l'appel.
- Voir une indication de message textuel ou vocal en attente, pour cet abonné.
- Commander l'affichage d'un message textuel en attente, ou la lecture d'un message vocal en attente.
- S'inscrire ou se désinscrire dans un groupement d'appel.
- Définir un profile de routage, à savoir, quel(s) terminal(aux) faire sonner à la réception d'un appel, et quel terminal utiliser pour passer un appel sortant commandé par une application.

Les échanges de signaux utilisent les messages normalisés du protocole de signalisation SIP mais en insérant, dans les champs libres réservés à des données applicatives, des données spécifiques aux services fournis par le système de communication d'entreprise SCE.

Selon une variante de réalisation, utilisable si les portes de chambre n'ont pas de lecteur de badge permettant de détecter l'entrée du client dans sa chambre, le terminal T comporte des moyens logiciels pour afficher en permanence un message invitant le client à saisir son identifiant et son mot de passe, dés qu'il a reçu un message indiquant que les services du système de communication d'entreprise SCE sont à la disposition du client.

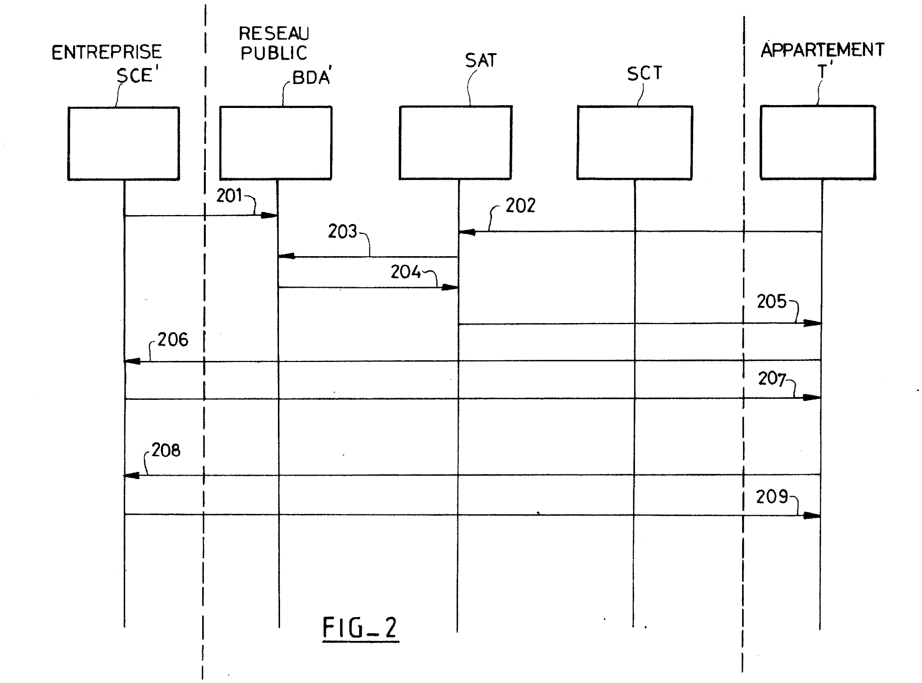

La figure 2 représente un exemple d'échange de signaux entre le système de communication d'entreprise SCE' et un terminal téléphonique T' d'un télétravailleur. Ce terminal T' est situé dans l'appartement d'un télétravailleur. Ce terminal T' supporte le protocole de signalisation SIP ou un autre protocole approprié pour échanger les messages décrit par la suite ; par exemple on peut utiliser le protocole HTTPS (HyperText Transfer Protocol) pour invoquer un service web. Le terminal T' est raccordé à un réseau de télécommunication public de type IMS, et est dédié à un serveur de communication téléphonique SCT gérant les appels téléphoniques pour des abonnés résidentiels. Le système de communication d'entreprise SCE' est raccordé au même réseau de télécommunication public de type IMS. Dans cet exemple, un exemple de réalisation SAT du serveur selon l'invention est installé dans le réseau public. C'est un serveur d'applications pour télétravailleurs.

Une base de données BDA', appartenant à un fournisseur de services, est reliée à ce réseau téléphonique public de type IMS. Elle mémorise des données identifiant :
- Les entreprises qui bénéficient d'un service permettant à un employé d'une entreprise donnée d'utiliser un terminal qui n'est pas relié au système de communication de cette entreprise, en bénéficiant de tous les services fournis habituellement par ce système de communication quand cet employé utilise un terminal de cette entreprise.
- Les employés autorisés par ces entreprises à bénéficier de ce service (Identifiants et données d'authentification par mots de passe).

Pour qu'un télétravailleur utilise un service fourni par le système de communication d'entreprise SCE', il y a un échange de messages de signalisation SIP, qui comporte les étapes suivantes :
- 201 : L'entreprise s'abonne à ce service. Le système de communication de l'entreprise SCE' envoie alors un message qui commande l'enregistrement de l'entreprise dans la base de données BDA'. Cet enregistrement comporte un identifiant de l'entreprise et une liste des employés de l'entreprise, qui sont autorisés à utiliser ces services (Identifiant et données d'authentification par mot de passe pour chaque employé autorisé).
- 202 : Le télétravailleur considéré appelle le serveur pour télétravailleurs SAT au moyen de son terminal T'. Il fournit au serveur SAT son nom et le nom de son entreprise.
- 203 : Le serveur d'applications pour télétravailleurs SAT envoie, à la base de données BDA', une requête demandant des données permettant d'authentifier ce télétravailleur, et des données permettant de commander le système de communication d'entreprise SCE' via le terminal T'.
- 204 : La base de données BDA' détermine si l'entreprise qui emploie ce télétravailleur est abonnée au service permettant à un employé d'une entreprise donnée d'utiliser un terminal qui n'est pas relié au système de communication de cette entreprise ; et détermine si ce télétravailleur est autorisé à utiliser ce service. Si ce télétravailleur et cette entreprise sont enregistrés dans la base de données BDA', cette base de données BDA' envoie au serveur d'applications pour télétravailleurs SAT des données permettant d'afficher une page d'accueil sur le terminal T', des données permettant d'authentifier un télétravailleur, et des données permettant de commander le système de communication d'entreprise SCE', après authentification du télétravailleur, de façon à bénéficier de services applicatifs directement depuis ce terminal.
- 205 : Le serveur d'applications pour télétravailleurs SAT retransmet ces données au terminal T'. Elles permettent au terminal T' d'afficher un texte invitant le télétravailleur à saisir son identifiant et son mot de passe, s'il souhaite bénéficier de tous les services fournis habituellement par le système de communication d'entreprise SCE'. Le télétravailleur saisit son identifiant et son mot de passe. Le terminal T' authentifie le télétravailleur selon un procédé d'authentification connu, en utilisant des données d'authentification fournies par le serveur SAT.
- 206 : Si le télétravailleur est authentifié, le terminal T' utilise les données permettant de commander le système de communication d'entreprise. Il constitue et envoie un message au système de communication d'entreprise SCE' pour demander à être enregistré comme un terminal du réseau d'entreprise.
- 207 : Le système de communication d'entreprise SCE' enregistre le terminal T', puis envoie au terminal T' un message indiquant que les services du système de communication d'entreprise SCE' sont à la disposition du télétravailleur via le terminal T', et l'invitant à choisir un service dans un menu. Ce message est affiché sur le terminal T' pendant une durée prédéterminée. Le télétravailleur n'utilise pas forcément ces services immédiatement.
- 208 : Ultérieurement, quand ce télétravailleur veut accéder à un service du système de communication d'entreprise SCE', il appuie sur une touche dédiée de son terminal T'. Ce terminal T' affiche alors un message l'invitant à saisir son identifiant et son mot de passe, avant de choisir un service. Ce message s'affiche sur le terminal T' pendant une durée prédéterminée. Le télétravailleur décide, par exemple, de consulter l'annuaire de l'entreprise. Il saisit de nouveau son identifiant et son mot de passe. Le terminal T' authentifie le télétravailleur selon le même procédé d'authentification connu. Il l'invite à choisir un service dans un menu. Si l'authentification se passe bien, le terminal T' envoie un message d'activation du service demandé, au système de communication d'entreprise SCE'.
- 209 : Le système de communication d'entreprise SCE' envoie au terminal T' un message commandant l'affichage d'informations d'annuaire.

Les échanges de signaux se déroulent de manière analogue pour tous les autres services que peut fournir le serveur d'entreprise SCE'.

## Revendications

1. Serveur d'applications (SAC ; SAT) permettant à un abonné donné d'un système de communication d'entreprise (SCE ; SCE') d'utiliser des services fournis par ce système, via un terminal donné (T ; T') qui n'appartient pas à ce système de communication d'entreprise (SCE ; SCE'); **caractérisé en ce qu'**il comporte :
- des moyens pour recevoir (104 ; 204), en provenance d'une base de données (BDA ; BDA'), des données permettant d'afficher une page d'accueil sur ce terminal (T ; T'), des données permettant d'authentifier cet abonné, et des données permettant de commander ce système de communication d'entreprise via ce terminal (T ; T') de façon à bénéficier de services applicatifs directement depuis ce terminal ;
- des moyens pour retransmettre (105 ; 205) à ce terminal (T ; T') les données reçues ;
- et des moyens pour demander (106 ; 206) au système de communication d'entreprise d'enregistrer ce terminal (T ; T') comme étant un terminal de ce système de communication d'entreprise, quand l'abonné a été authentifié.

2. Base de données (BDA' ; BDA') permettant à un abonné donné d'un système de communication d'entreprise (SCE ; SCE') d'utiliser des services fournis par ce système, via un terminal donné (T ; T') qui n'appartient pas à ce système de communication d'entreprise (SCE ; SCE') ; **caractérisée en ce qu'**elle comporte :
- des moyens pour recevoir (103 ; 203) une requête demandant des données permettant d'afficher une page d'accueil sur ce terminal (T ; T'), des données permettant d'authentifier cet abonné, et des données permettant de commander ce système de communication d'entreprise (SCE ; SCE') via ce terminal (T ; T') ;
- et des moyens pour fournir les données demandées dans cette requête.

## Revendications modifiées

### Revendications modifiées conformément à la règle 137(2) CBE.

**1.** Serveur d'applications (SAH ; SAT) permettant à un abonné d'un système de communication d'entreprise (SCE ; SCE') d'utiliser des services fournis par ce système, via un terminal (T ; T') qui n'appartient pas à ce système de communication d'entreprise (SCE ; SCE'); **caractérisé en ce qu'**il comporte :
- des moyens pour recevoir (104 ; 204), en provenance d'une base de données (BDA ; BDA'), des données permettant d'afficher une page d'accueil sur un terminal (T ; T') qui n'appartient pas à ce système de communication d'entreprise (SCE ; SCE'); des données permettant d'authentifier cet abonné via un terminal (T ; T') qui n'appartient pas à ce système de communication d'entreprise (SCE ; SCE'); et des données permettant à un abonné de commander ce système de communication d'entreprise via un terminal (T ; T') qui n'appartient pas à ce système de communication d'entreprise (SCE ; SCE'), de façon à :
-- faire enregistrer (106 ; 206) ce terminal (T ; T') comme un terminal de ce système de communication d'entreprise (SCE ; SCE') quand l'abonné a été authentifié ;
-- faire bénéficier (107, 207) cet abonné de services applicatifs fournis par ce système de communication d'entreprise (SCE ; SCE'), directement depuis ce terminal (T ; T'), quand ce terminal a été enregistré ;
- et des moyens pour retransmettre (105 ; 205) à ce terminal (T ; T') les données reçues.

**2.** Base de données (BDA' ; BDA') permettant à un abonné d'un système de communication d'entreprise (SCE ; SCE') d'utiliser des services fournis par ce système, via un terminal (T ; T') qui n'appartient pas à ce système de communication d'entreprise (SCE ; SCE') ; **caractérisée en ce qu'**elle comporte :
- des moyens stockant des données permettant d'afficher une page d'accueil sur un terminal (T ; T') qui n'appartient pas à ce système de communication d'entreprise (SCE ; SCE'), des données permettant d'authentifier un abonné via un terminal (T ; T') qui n'appartient pas à ce système de communication d'entreprise (SCE ; SCE'), et des données permettant à un abonné de commander ce système de communication d'entreprise directement via un terminal (T ; T') qui n'appartient pas à ce système de communication d'entreprise (SCE ; SCE'), de façon à :
-- faire enregistrer (106 ; 206) ce terminal (T ; T') comme un terminal de ce système de communication d'entreprise (SCE ; SCE') quand l'abonné a été authentifié ;
-- faire bénéficier (107, 207) cet abonné de services applicatifs fournis par ce système de communication d'entreprise (SCE ; SCE'), directement depuis ce terminal (T ; T'), quand ce terminal a été enregistré ;
- des moyens pour recevoir (103 ; 203) une requête demandant des données stockées dans cette base de données ;
- et des moyens pour fournir les données demandées dans cette requête.
